Europäisches Patentamt

European Patent Office

Office européen des brevets

(19)

(11) Veröffentlichungsnummer: **0 116 125 B1**

(12) **EUROPÄISCHE PATENTSCHRIFT**

(45) Veröffentlichungstag der Patentschrifft:
28.02.90

(51) Int. Cl. ⁵: **G 01 D 15/16**

(21) Anmeldenummer: **83111018.4**

(22) Anmeldetag: **04.11.83**

(54) Montageverfahren für die Schreibstifte eines Fahrtschreibers.

(30) Priorität: **13.11.82 DE 3242140**

(43) Veröffentlichungstag der Anmeldung:
**22.08.84 Patentblatt 84/34**

(45) Bekanntmachung des Hinweises auf die Patenterteilung:
**28.02.90 Patentblatt 90/09**

(84) Bennante Vertragsstaaten:
**DE FR GB IT**

(56) Entgegenhaltungen:
**US-A-3 105 731**
**US-A-3 761 948**

(73) Patentinhaber: **Mannesmann Kienzle GmbH**
**Heinrich-Hertz-Strasse**
**D-7730 Villingen-Schwenningen (DE)**

(72) Erfinder: **Siefert, Roland**
**Im Herrengarten 6**
**D-7737 Bad Dürrheim (DE)**

LIBERGRAF, STOCKHOLM 1990

**Beschreibung**

Die Erfindung betrifft ein Montageverfahren für die Schreibstifte eines Fahrtschreibers, welcher zum Wechseln der als Aufzeichnungsträger verwendeten Diagrammscheiben aus einem Gehäuse und einem Deckel besteht, wobei der Deckel gelenkig und verriegelbar mit dem Gehäuse ver-bunden ist und wobei im Deckel neben anderen Funktionsgruppen ein die Diagrammscheiben uhrzeitrichtig antreibendes Laufwerk mit einer mit einem Zentrier- und Mitnahmedorn versehenen Diagrammscheibenauflage angeordnet ist, und im Gehäuse unter anderem ein Registrierwerk mit mehreren auf jeweils quer zur Transportrichtung des Aufzeichnungsträgers bewegbar angeordneten Trägern federnd gelagerten Schreibstiften vorgesehen ist, wobei die Schreibstifte über Lagerbrücken mit den Trägern verbunden sind.

Weiterhin betrifft die Erfindung eine Vorrichtung zur Durchführung dieses Verfahrens.

Bei Fahrtschreibern dieser Bauform ist es leicht einzusehen, daß sich aufgrund vielfältiger Fertigungs- und Montagetoleranzen, aber auch der erforderlichen Laufspiele wegen die tatsächliche Registrierbahn eines Schreibstiftes auf der deckelseitig angeordneten Diagrammscheibe nicht mit deren erwarteter Lage auf einer Diagrammscheibenradialen, letztlich – ein uhrzeitrichtiger Antrieb der Diagrammscheibe vorausgesetzt – auf der jeweils uhrzeitaktuellen Diagrammscheibenradialen deckt.

Zwar ist es, um Toleranzwirkungen der Gelenk– bzw. Scharnierverbindung zwischen Deckel und Gehäuse, insbesondere aber auch verschleißbedingtes oder bewußt vorgesehenes Lagerspiel auszuschalten bzw. den Fertigungsaufwand einer hochgenauen Gelenkverbindung zwischen Deckel und Gehäuse zu vermeiden, bekannt, Zentriermittel vorzusehen, die beim Schließen des Deckels wirksam werden. Dennoch können sich infolge der Vielzahl der einerseits im Registrierwerk, andererseits im Laufwerk additiv zusammengefügter Bauteile und der bei der Großserienfertigung, soweit dies tragbar ist, relativ groben Toleranzgebung erhebliche Abweichungen in der Lage der Schreibstifte zur Diagrammscheibenradialen ergeben. D. h. die tatsächliche Registrierbahn eines Schreibstiftes kann bezüglich der uhrzeitaktuellen Diagrammscheibenradialen parallel versetzt sein, sie kann aber auch, obwohl radial gerichtet, nicht auf der uhrzeitaktuellen Diagrammscheibenradialen liegen, und es können beide Fehlertypen kombiniert sein. Außerdem ist es denkbar, daß die Registrierbahn eines Schreibstiftes zwar mit der uhrzeitaktuellen Diagrammscheibenradialen übereinstimmt, daß sie aber bezüglich ihrer vorgesehenen Lage radial versetzt ist. Ebenso können die Registrierbahn mehrerer Schreibstifte gegeneinander und gegenüber einem auf der Diagrammscheibe aufgedruckten Netzwerk versetzt sein.

Da die Aufzeichnungen eines Fahrtschreibers nicht nur wirtschaftlicher Gesichtspunkte wegen erfolgen, sondern vor allem Verkehrssituationen festhalten und wiedergeben sollen und in dieser Eigenschaft sowohl der Unfallauswertung als auch der Verkehrskontrolle dienen, sind derartige Fehler insbesondere bezüglich der Geschwindigkeitsaufzeichnungen nicht tragbar und müssen zumindest auf ein visuell nicht mehr wahrnehmbares Maß reduziert werden. Das hierfür derzeit übliche Justierverfahren, das aufgrund einer Testaufzeichnung ein Herantasten an die Sollage des Schreibstiftes durch Biegen der Lagerbrücke des Schreibstiftes vorsieht, wobei meist mehrmals die Arbeitsfolge "Testlauf, Öffnen des Fahrtschreibers, Kontrollieren der Aufzeichnung, Biegen der Lagerbrücke, Schließen des Fahrtschreibers, Testlauf usw." erforderlich ist, ist jedoch nicht nur kostenaufwendig, es stört auch den Fertigungsfluß, und es ist, abgesehen davon, daß bereits die Vormontage von Lagerbrücke und deren Träger unter Verwendung einer Vorrichtung erfolgt, nicht mechanisierbar. Außerdem besteht beim Biegen der Lagerbrücke die Gefahr, daß die Lagerstellen des Schreibstiftes in den Brückenschenkeln außer Flucht kommen und der Schreibstift klemmt, zumindest jedoch die erforderliche, leicht gängige Federungsfähigkeit des Schreibstiftes in axialer Richtung nicht mehr gewährleistet ist und jeweils zusätzlich kontrolliert werden muß.

Die Aufgabe, die durch die Erfindung gelöst wird, bestand nun darin, den geschilderten Justieraufwand zu vermeiden, insbesondere eine von subjektiver Geschicklichkeit unabhängige Justierung der Schreibstifte zu finden. Dabei soll eine weitgehende Mechanisierung und somit eine gute Reproduzierbarkeit der Justierung ermöglicht und Funktionsmängel als Folge der Schreibstiftjustierung ausgeschaltet werden.

Die Lösung dieser Aufgabe sieht vor, daß bei der Vormontage des Registrierwerks die Lagerbrücke wenigstens eines Schreibstiftes derart mit dem dem Schreibstift zugeordneten Träger verbunden wird, daß sie an dem Träger lediglich lose gehaltert ist, daß nach dem Zusammenfügen der Gelenkverbindung zwischen Deckel und Gehäuse, wobei im Deckel wenigstens das Laufwerk und im Gehäuse wenigstens das Registrierwerk vormontiert sind, auf den Zentrier- und Mitnahmedorn der Diagrammscheibenauflage eine mit wenigstens dem einen Schreibstift zugeordnete Zentrieröffnung versehene Justierschablone aufgesetzt wird, daß nach erfolgtem Ausrichten der Justierschablone und somit der in bezug auf die Diagrammscheibenauflage auf einer Radialen angeordneten Zentrieröffnung in die vorgesehene Bewegungsrichtung des Schreibstiftes, was durch Betätigen der Zeiteinstellvorrichtung des Laufwerkes erzielbar ist, Deckel und Gehäuse miteinander verriegelt werden und daß nachfolgend, indem das Registrierwerk von der offenen Rückseite des Gehäuses zugänglich ist, die Lagerbrücke des Schreibstiftes, die über den Schreibstift, dessen Spitze unter der Wirkung einer den Schreibdruck liefernden Feder in der Zentrieröffnung der Justierschablone festgelegt ist, ausgerichtet ist, an dem Träger befestigt wird.

Eine erfindungsgemäße Vorrichtung zur Durchführung dieses Verfahrens ist dadurch gekennzeichnet, daß an dem vorzugsweise als ein in geeigneter Weise geführter Registrierschlitten ausgebildeten Träger eine quer zur Achse des Schreibstiftes liegende Tasche ausgeformt ist, der eine Schenkel der dem Registrierschlitten zugeordneten Lagerbrücke, wenn er in die Tasche eingeführt ist, allseits um ein gewisses Maß in Taschenebene verschwenkbar gehaltert ist und daß die Befestigung der Lagerbrücke an dem Registrierschlitten durch Kleben erfolgt.

Mit der Erfindung, die die gestellte Aufgabe in vollem Umfange löst, können, was einen besonderen Vorteil darstellt, die Halter- bzw. die Lagerbrücken der Schreibstifte in einer durch die Justierschablone gegebenen Sollage der Schreibstiftspitzen spannungsfrei auf den jeweiligen Trägern bzw. Schlitten befestigt und somit ein Nachjustieren vermieden werden.

Mit der erfindungsgemäßen Lösung ist ferner, da das Justieren mittelbar während des Montierens der Schreibstifte erfolgt, das Risiko einer Fehljustierung und der Funktionsbeeinträchtigung der Schreibstifte während des Justierens ausgeschaltet, so daß die Montage auch von einer geschulten Arbeitskraft ausgeführt werden kann. Im übrigen wird durch die verfahrensgemäße Montage der Austausch des Registrierwerks und/oder des Laufwerkes beispielsweise in Kundendienstwerkstätten in besonderer Weise vereinfacht.

Anhand der beigefügten Zeichnungen sei die Erfindung im folgenden näher erläutert.
Es zeigen

FIG. 1 einen geöffneten Fahrtschreiber zusammen mit einer einlegebereit dargestellten Schreibstift-Justierschablone in einer perspektivischen Darstellung,

FIG. 2 eine ausschnittweise Seitenansicht des geschlossenen Fahrtschreibers mit eingelegter Schreibstift-Justierschablone,

FIG. 3 einen Schnitt durch die an einem Registrierschlitten eines Fahrtschreibers angeordnete Lagerbrücke,

FIG. 4 eine teilweise Draufsicht auf den Registrierschlitten gemäß FIG. 3 und die an dem Registrierschlitten angebrachte Lagerbrücke.

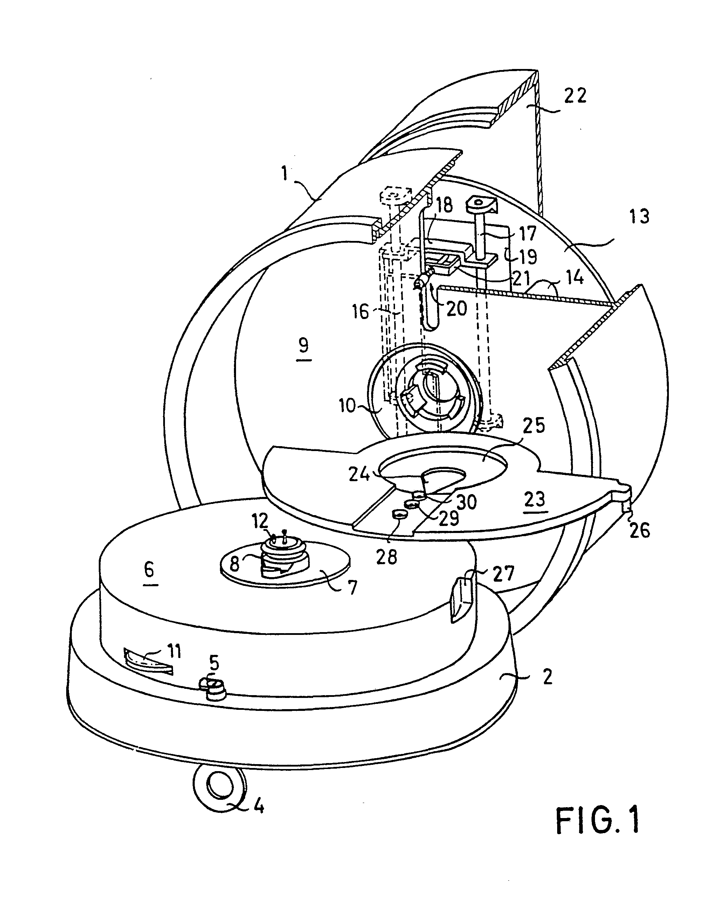

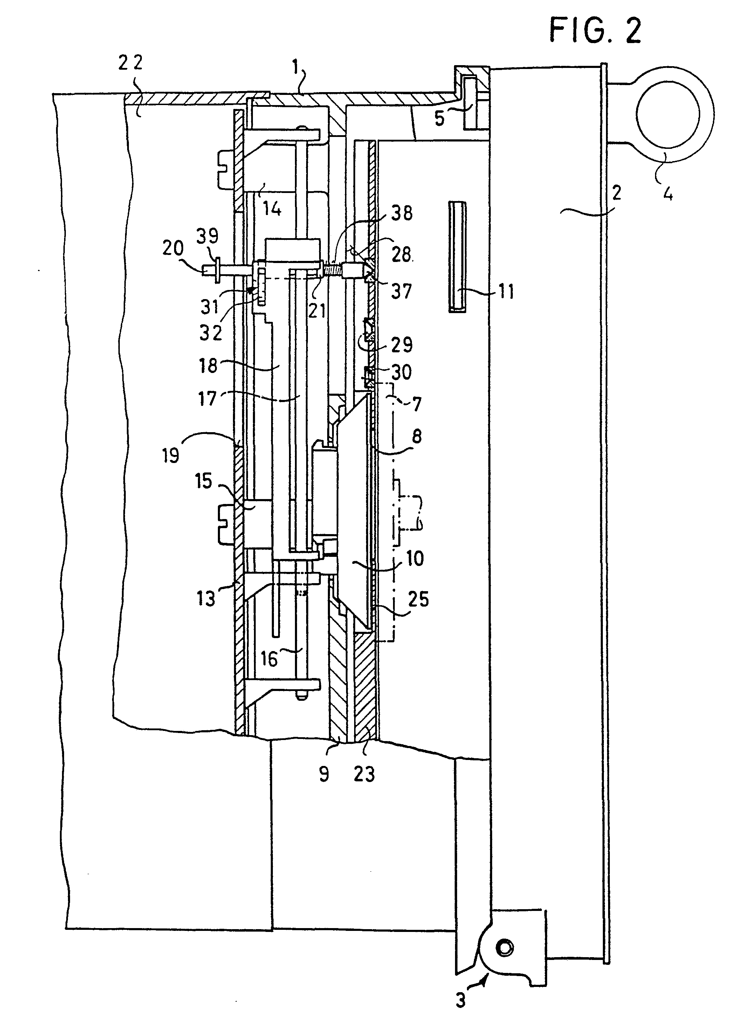

Die perspektivische Darstellung FIG. 1 zeigt einen Fahrtschreiber allgemein üblicher Bauform, mit einem Gehäuse 1 und einem Deckel 2, welche miteinander beispielsweise mittels eines Scharniers 3, wie es in FIG. 2 dargestellt ist, gelenkig verbunden sind. Dem eingriffssicheren Schließen des Deckels 2, welcher im allgemeinen wenigstens Mittel für die Anzeige der momentan gefahrenen Geschwindigkeit und der zurückgelegten Strecken, Mittel für die Uhrzeitanzeige sowie Antriebsmittel für die als Aufzeichnungsträger verwendeten Diagrammscheiben beinhaltet, dient üblicherweise ein mittels eines Schlüssels 4 betätigbarer Riegel 5. Mit 6 ist eine – bezogen auf den Fahrtschreiber – nach innen weisende Fläche des Deckels 2 bezeichnet, die den Diagrammscheiben als Führungsfläche und Registrierunterlage dient, während mit 7 eine Diagrammscheibenauflage bezeichnet ist, welche ein den Diagrammscheiben zugeordneter Zentrier- und Mitnahmedorn 8 aufweist und mit der Stundenwelle eines im Deckel befindlichen, jedoch nicht dargestellten Laufwerkes verbunden ist. Das Festhalten der Diagrammscheiben auf der Diagrammscheibenauflage 7 erfolgt in an sich bekannter Weise, indem beim Schließen des Deckels 2 eine lose in einer Zwischenwand 9 des Gehäuses 1 gehalterte Spannglocke 10 auf den Zentrier- und Mitnahmedorn 8 aufrastet. Ein Stellrad 11 dient dem Richten der Uhrzeitanzeigemittel und der Diagrammscheibenauflage 7 auf die jeweils aktuelle Uhrzeit, während mit 12 ein Kupplungsorgan für einen nicht dargestellten Geschwindigkeitszeiger bezeichnet ist.

Wie ferner der FIG. 1 entnommen werden kann, ist in dem Gehäuse 1 des Fahrtschreibers eine das Registrierwerk tragende Platine 13 angeordnet, d. h. auf mehreren Distanzpfeilern, von denen in FIG. 1 einer – 14 – und in FIG. 2 ein weiterer – 15 – dargestellt sind, befestigt.

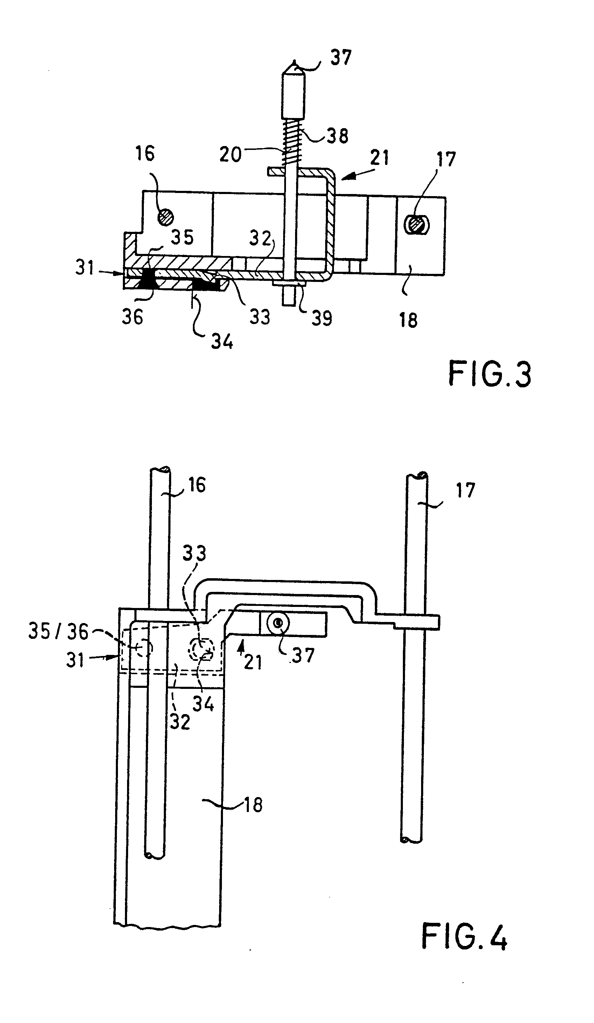

Der Übersichtlichkeit wegen ist von dem Registrierwerk lediglich ein auf zwei in geeigneter Weise an der Platine 13 befestigten Führungsstangen 16 und 17 verschiebbar gelagerter Registrierschlitten 18 dargestellt. Der übliche Stand der Technik sieht im allgemeinen wenigstens drei Registrierschlitten, die vorzugsweise alle auf ein und derselben Führungsstange zentriert sind, während die andere Führungsstange lediglich als Verdrehsicherung dient, oder schwenkbar gelagerte für die Geschwindigkeitsaufzeichnung mit einer Lenker-Geradführung ausgerüstete Registrierhebel vor. Ebenso wurde, weil nicht erfindungswesentlich, auf die Darstellung der erforderlichen getrieblichen Verbindungen des Registrierschlittens 18 mit beispielsweise einem antreibenden Motor sowie auf die meßwertbildenden Mittel verzichtet. Ein in der Platine 13 vorgesehener Durchbruch 19 macht den Registrierschlitten 18, an welchem, was im einzelnen in den FIG. 3 und 4 dargestellt ist, eine der Lagerung des Schreibstiftes 20 dienende Lagerbrücke 21 lose gehalten ist, an der Rückseite des Gehäuses 1 zugänglich. Mit 22 ist eine Haube bezeichnet, die mit dem Gehäuse 1 verbindbar ist und somit den rückwärtigen Abschluß des Fahrtschreibers bildet.

Wie aus FIG. 1 weiter hervorgeht, ist dem Fahrtschreiber eine Justierschablone 23 zugeordnet, die eine der Kontur des Zentrier- und Mitnahmedorns 8 entsprechende Aufnahmeöffnung 24 aufweist und deren Dicke in einem zentralen Bereich, dessen Durchmesser größer sein muß als der Durchmesser der Spannglocke 10, weitestmöglich der Dicke der in Anwendung kommenden Diagrammscheiben angenähert ist. Damit wird erreicht, daß die Spannglocke 10 beim Schließen des Deckels 2 und eingelegter Justierschablone 23 in der gleichen Weise wirksam werden kann wie wenn eine Diagrammscheibe eingelegt wäre. Ferner ist an der Justierschablone 23 ein Stift 26 vorgesehen, dem eine am Deckel 2 ausgebildete Anschlagfläche 27 zugeordnet ist. Dem Positionieren der Schreibstifte dienen mehrere auf einer Radialen zur Aufnahmeöffnung 24 liegende, relativ große, trichterförmige Zentrieröffnungen 28, 29 und 30, die mit Rücksicht auf die Empfindlichkeit der zu zentrierenden Schreibstiftspitzen vorzugsweise in bezüglich des Werkstoffes geeigneten, mit der Justierschablone 23 verbindbaren, nicht näher bezeichneten Einsätzen ausgebildet sind.

Für die Anordnung der Lagerbrücke 21 am Registrierschlitten 18 ist, wie aus den FIG. 3 und 4 hervorgeht, eine an dem Registrierschlitten 18 ausgebildete Tasche 31 vorgesehen, in die der eine verlängert ausgebildete Schenkel 32 der Lagerbrücke 21 einführbar ist. Dabei ist senkrecht zur Einführebene zwischen dem Schenkel 32 und den Taschenwänden eine relativ enge Passung vorgesehen, während in der Einführebene, was insbesondere aus FIG. 4 ersichtlich ist, in einem gewissen Bereich ein allseitiges Verschieben des Schenkels 32 der Lagerbrücke 21 gegeben ist. Eine an dem Schenkel 32 herausgedrückte Nase 33 gibt im Zusammenwirken mit einer am Registrierschlitten 18 ausgebildeten Öffnung 34 der Lagerbrücke 21 bei den bis zum endgültigen Befestigen der Lagerbrücke 21 durchzuführenden Montagearbeitsgängen eine ausreichende Haltesicherheit, während die fluchtenden Öffnungen 35 und 36 einerseits im Schenkel 32, andererseits im Registrierschlitten 18 bei der vorgesehenen Verbindung der beiden Bauteile durch Kleben einem durchgehenden Klebstofffluß und einer beide Teile verbindenden Pfropfbildung dienen.

Der Vollständigkeit halber sei noch erwähnt, daß dem in der Lagerbrücke verschiebbar gelagerten Schreibstift 20, dessen Spitze 37 eine in geeigneter Weise gefaßte Steinspitze darstellt, in an sich bekannter Weise unter der Wirkung einer die Schreibkraft liefernden Feder 38 steht, durch die ein sicherer Eingriff der Schreibstiftspitze 37 in der betreffenden Zentrieröffnung 28 der Justierschablone 23 gewährleistet ist. Mit 39 ist eine mit dem nicht näher bezeichneten Schaft des Schreibstiftes 20 verbundene Sicherungsscheibe bezeichnet.

Der Arbeitsablauf bei der erfindungsgemäßen Montage und Justierung des Schreibstiftes 20 bzw. mehrerer in gleicher Weise angeordneter Schreibstifte ist somit folgender: Nach der Vormontage des Registrierwerks auf der Platine 13, bei der beispielsweise die Lagerbrücke 21 lose in die am Registrierschlitten 18 ausgebildete Tasche 31 eingeführt und verrastet ist, wird das Registrierwerk im Gehäuse 1 des Fahrtschreibers befestigt. Ebenso erfolgt der Einbau des Laufwerks im Deckel 2 oder bereits der vollständige Ausbau des Deckels 2 und danach der Zusammenbau, d. h. die Komplettierung der Gelenkverbindung zwischen Deckel 2 und Gehäuse 1. Anschließend wird bei geöffnetem Deckel 2 die Justierschablone 23 auf den Zentrier- und Mitnahmedorn 8 aufgesetzt und durch Betätigen des Stellrades 11 ausgerichtet, d. h. soweit des Zahnspieles wegen entgegen dem Laufwerksantrieb verstellt bis der Stift 26 an der Anschlagfläche 27 anliegt. Danach wird der Deckel 2 geschlossen, wobei eine selbsttätige Zentrierung zwischen dem lose am Registrierschlitten 18 gehalterten Schreibstift 20 und der diesem in der Justierschablone 23 zugeordneten Zentrieröffnung erfolgt. Nachfolgend wird die Lagerbrücke 21, indem die Öffnungen 34 und 36 von der Rückseite des Gehäuses 1 zugänglich sind, in der Tasche 31 des Registrierschlittens 18 verklebt und somit die justierte Position des Schreibstiftes 20 spannungsfrei festgehalten.

Abschließend sei noch erwähnt, daß eine winkelmäßige Abweichung der tatsächlichen Registrierbahn von der üblichen 0-Uhr-Registrierrichtung dadurch korrigierbar ist, daß die Platine 13 und damit die zentrierende Führungsstange um ein gewisses Maß verdrehbar angeordnet wird oder besser, daß die Anschlagfläche 27, indem z. B. ein Exzenter vorgesehen wird, verstellbar ausgebildet wird, so daß derartige, im allgemeinen serienbedingte Lageänderungen des Registrierwerkes durch eine einmalige Einstellung dieses Exzenters berücksichtigt werden können.

**Patentansprüche**

1. Montageverfahren für die Schreibstifte (20) eines Fahrtschreibers, welcher zum Wechseln der als Aufzeichnungsträger verwendeten Diagrammscheiben aus einem Gehäuse (1) und einem Deckel (2) besteht, wobei der Deckel (2) gelenkig und verriegelbar mit dem Gehäuse (1) verbunden ist, und wobei im Deckel (2) neben anderen Funktionsgruppen ein die Diagrammscheiben uhrzeitrichtig antreibendes Laufwerk mit einer mit einem Zentrier- und Mitnahmedorn (8) versehenen Diagrammscheibenauflage (7) angeordnet ist und im Gehäuse (1) unter anderem ein Registrierwerk mit mehreren auf jeweils quer zur Transportrichtung des Aufzeichnungsträgers bewegbar angeordneten Trägern (18) federnd gelagerten Schreibstiften vorgesehen ist, wobei die Schreibstifte (20) über Lagerbrücken (21) mit den Trägern (18) verbunden sind, dadurch gekennzeichnet, daß bei der Vormontage des Registrierwerks die Lagerbrücke (21) wenigstens eines Schreibstiftes (20) derart mit dem dem Schreibstift (20) zugeordneten Träger (18) verbunden wird, daß sie an dem Träger (18) lediglich lose gehalten ist, daß nach dem Zusammenfügen der Gelenkverbindung (3) zwischen Deckel (2) und Gehäuse (1), wobei im Deckel (2) wenigstens das Laufwerk und im Gehäuse (1) wenigstens das Registrierwerk vormontiert sind, auf den Zentrier- und Mitnahmedorn (8) der Diagrammscheibenauflage (7) eine mit wenigstens einer dem einen Schreibstift (20) zugeordnete Zentrieröffnung (28) versehene Justierschablone (23) aufgesetzt wird, daß nach erfolgtem Ausrichten der Justierschablone (23) und somit der in bezug auf die Diagrammscheibenauflage (7) auf einer Radialen angeordneten Zentrieröffnung (28) in die vorgesehene Bewegungsrichtung des Schreibstiftes (20), was durch Betätigen der Zeiteinstellvorrichtung (11) des Laufwerkes erzielbar ist, Deckel (2) und Gehäuse (19 miteinander verriegelt und daß nachfolgend, indem das Registrierwerk von der offenen Rückseite des Gehäuses (1) zugänglich ist, die Lagerbrücke (21) des Schreibstiftes (20), die über diesen Schreibstift (20), dessen Spitze (37) unter der Wirkung einer den Schreibdruck liefernden Feder (38) in der Zentrieröffnung (28) der Justierschablone (23) festgelegt ist, ausgerichtet ist, an dem Träger (18) befestigt wird.

2. Montageverfahren nach Anspruch 1, dadurch gekennzeichnet, daß die Befestigung der Lagerbrücke (21) des Schreibstiftes (20) durch Kleben erfolgt.

3. Anordnung zur Durchführung des Montageverfahrens nach den Ansprüchen 1 und 2 in einem Fahrtschreiber mit einem Gehäuse (1) und einem Deckel (2), welcher gelenkig und verriegelbar mit dem Gehäuse (1) verbunden ist, wobei im Deckel (2) neben anderen Funktionsbaugruppen ein die als Aufzeichnungsträger verwendeten Diagrammscheiben uhrzeitrichtig antreibendes Laufwerk mit einer mit einem Zentrier– und Mitnahmedorn (8) versehenen Diagrammscheibenauflage (7) angeordnet ist und im Gehäuse (1) unter anderem ein Registrierwerk mit mehreren auf jeweils quer zur Transportrichtung der Diagrammscheibe bewegbar angeordneten Trägern federnd gelagerten Schreibstift (20) vorgesehen ist, wobei die Schreibstifte (20) über Lagerbrücken (21) mit den Trägern (18) verbunden sind, dadurch gekennzeichnet, daß an dem vorzugsweise als ein in geeigneter Weise geführter Registrierschlitten (18) ausgebildeten Träger wenigstens eines Schreibstiftes eine quer zur Achse des Schreibstiftes (20) liegende Tasche (31) ausgeformt ist und daß der eine Schenkel (32) der dem Registrierschlitten (28) zugeordneten Lagerbrücke (21), wenn er in die Tasche (31) eingeführt ist, allseits um ein gewisses Maß in Taschenebene verschwenkbar gehalten ist.

Claims

1. Mounting process for the styluses (20) of a tachograph which, for changing the chart discs used as record carriers, comprises a housing (1) and a cover (2), the cover (2) being connected to the housing (1) in articulated and lockable manner, and, in addition to other functional assemblies, a driving gear driving the chart discs in real time and having a chart disc support (7) provided with a centering and driving arbor (8) being arranged in the cover (2), and amongst other things a registration mechanism having a plurality of styluses mounted resiliently on carriers (18) arranged movably and respectively transversely to the direction of transport of the record carrier being provided in the housing (1), the styluses (20) being connected to the carriers (18) via bearing brackets (21), characterized in that during the pre-mounting of the registration mechanism the bearing bracket (21) of at least one stylus (20) is connected to the carrier (18) associated with the stylus (20) such that it is mounted only loosely on the carrier (18), in that after bringing together the articulated connection (3) between the cover (2) and the housing (1), at least the driving gear being pre-mounted in the cover (2) and at least the registration mechanism being pre-mounted in the housing (1), an adjusting template (23) provided with at least one centering opening (28) associated with one stylus (20) is placed on the centering and driving arbor (8) of the chart disc support (7), in that once the adjusting template (23) and thus the centering opening (28) arranged on a radial line with respect to the chart disc support (7) have been aligned in the intended direction of motion of the stylus (20), which is achievable by actuating the time adjustment apparatus (11) of the driving gear, the cover (2) and the housing (1) are locked to one another, and in that subsequently, the registration mechanism being accessible from the open rear side of the housing (1), the stylus (20) bearing bracket (21), which is aligned by way of this stylus (20), whereof the tip (37) is positioned in the centering opening (28) of the adjusting template (23) under the action of a spring (38) providing the stylus pressure, is secured to the carrier (18).

2. Mounting process according to claim 1, characterized in that the bearing bracket (21) of the stylus (20) is secured by gluing.

3. Arrangement for carrying out the mounting process according to claims 1 and 2 in a tachograph having a housing (1) and a cover (2) which is connected to the housing (1) in articulated and lockable manner, in addition to other functional assemblies a driving gear driving the chart discs used as record carriers in real time and having a chart disc support (7) provided with a centering and driving arbor (8) being arranged in the cover (2) and amongst other things a registration mechanism having a plurality of styluses (20) mounted resiliently on carriers arranged movably and respectively transversely to the direction of transport of the chart disc being provided in the housing (1), the styluses (20) being connected to the carriers (18) via bearing brackets (21), characterized in that a pocket (31) lying transverse to the axis of the stylus (20) is made in the carrier of at least one stylus, preferably constructed as a registration carriage (18) guided in suitable manner, and in that one leg (32) of the bearing bracket (21) associated with the registration carriage (18) is mounted to be pivotal by a certain amount in all directions in the plane of the pocket, once inserted into the pocket (31).

## Revendications

1. Procédé de montage pour les stylets scripteurs (20) d'un enregistreur de route qui est constitué, pour le changement des disques de diagramme utilisés comme support d'enregistrement, d'un boîtier (1) et d'un capot (2), le capot (2) étant articulé sur le boîtier (1) et pouvant être verrouillé, un mécanisme d'entraînement entraînant les disques de diagramme en fonction du temps réel avec une table porte-graphique (7) pourvue d'une broche de centrage et d'entraînement (8) étant disposé, en plus d'autres groupes de fonction, dans le capot (2) et un mécanisme d'enregistrement avec plusieurs stylets scripteurs (20) montés élastiquement sur des supports (18) disposés chacun mobile transversalement au sens de transport du support d'enregistrement, étant prévus dans le boîtier, les stylets scripteurs (20) étant reliés aux supports (18) par l'intermédiaire de ponts à paliers (21), caractérisé par le fait que, lors du prémontage du mécanisme d'enregistrement, le pont à palier (21) d'au moins un stylet scripteur (20) est relié au support (18) affecté audit stylet scripteur (20), de telle sorte qu'il soit seulement monté lâchement sur le support (18) que, après l'assemblage de l'articulation (3) entre le capot (2) et le boîtier (1), le prémontage au moins du mécanisme d'entraînement dans le capot (2) et au moins du mécanisme d'enregistrement dans le boîtier (1) étant effectué, un gabarit d'ajustage (23) pourvu d'une ouverture de centrage (28) affectée au moins à l'un des stylets scripteurs (20) est pose sur la broche de centrage et d'entraînement (8) de la table porte-graphique (7), que, après l'achèvement de l'alignement du gabarit d'ajustage (23) et, de ce fait, de l'ouverture de centrage (28) disposée, par rapport à la table porte-graphique (7), sur une radiale, dans le sens prévu du stylet scripteur (20), ce qui peut être obtenu par l'actionnement du dispositif de réglage de temps (11) du mécanisme d'entraînement, capot (2) et boîtier (1) sont verrouillés ensemble et que, ensuite, le mécanisme d'enregistrement étant accessible par la face arrière ouverte du boîtier (1), le pont à palier (21) du stylet scripteur (20) qui est aligné, par l'intermédiaire dudit stylet scripteur (20) dont la pointe (37) est déterminée, sous l'action d'un ressort (38) fournissant la pression d'inscription, dans l'ouverture de centrage (28) du gabarit d'ajustage (23), sera fixe sur le support (18).

2. Procédé de montage selon la revendication 1, caractérisé par le fait que la fixation du pont à palier (21) du stylet scripteur (20) se fait par collage.

3. Dispositif pour l'exécution du procédé de montage selon les revendications 1 et 2 dans un enregistreur de route avec un boîtier (1) et un capot (2) qui est articulé sur le boîtier (1) et peut être verrouillé, un mécanisme d'entraînement entraînant les disques de diagramme utilisés comme supports d'enregistrement en fonction du temps réel, avec une table porte-graphique (7) pourvue d'une broche de centrage et d'entraînement (8) étant disposé, en plus d'autres groupes de fonction, dans le capot (2) et un mécanisme d'enregistrement avec plusieurs stylets scripteurs (20) montés élastiquement sur des supports (18) disposés chacun mobile transversalement au sens de transport du disque de diagramme, étant prévu dans le boîtier (1), les stylets scripteurs (20) étant reliés aux supports (18) par l'intermédiaire de ponts à paliers (21), caractérisé par le fait que, sur le support — formé, de préférence, comme chariot d'enregistrement (18) guidé d'une manière appropriée d'au moins un stylet scripteur (20), est formée une poche (31) située transversalement à l'axe du stylet scripteur (20), et que l'une des branches (32) du pont à palier (21) affectée au chariot d'enregistrement (18), est fixée, lorsqu'elle est introduite dans la poche (31), de manière à pouvoir pivoter, d'une certaine mesure, de tous côtés, dans le plan de poche.

FIG.1

FIG. 2

FIG.3

FIG.4